# EUROPÄISCHE PATENTANMELDUNG

(11) **EP 1 164 337 A1**
(43) Veröffentlichungstag der Anmeldung: **19.12.2001**
(21) Anmeldenummer: 01111505.2
(22) Anmeldetag: 11.05.2001
(51) Int. Cl.: F24J 2/07, F24J 2/28, F24J 2/48

(54) **Gasbehandlungskörper**

(30) Priorität: 17.06.2000 DE 10029940
(71) Anmelder: Deutsches Zentrum für Luft- und Raumfahrt e.V., 53175 Bonn (DE)
(72) Erfinder: Hoffschmidt, Bernhard, 51467 Bergisch Gladbach (DE)
(74) Vertreter: von Kirschbaum, Alexander, Dipl.-Ing.

(57) **Zusammenfassung**

Ein Gasbehandlungskörper, der insbesondere als Absorber für solarthermische Kraftwerke einsetzbar ist, weist eine Gaseintrittsfläche (38) und eine Gasaustrittsfläche (40) auf. Mehrere im Wesentlichen parallel zueinander verlaufende Porenkanäle (36), verlaufen von der Gaseintrittsfläche (38) zur Gasaustrittsfläche (40). Durch die Porenkanäle wird ein Gas geleitet. Bei der Verwendung als Absorber für ein solarthermisches Kraftwerk handelt es sich bei dem Gas um Umgebungsluft, die als Wärmeträgermedium verwendet wird. Um lokale Verbrennungen zu vermeiden, weist jeder Porenkanal (36) eine den Kanalquerschnitt verengende Drossel (32, 34) auf.

## Beschreibung

Die Erfindung betrifft einen Gasbehandlungskörper, insbesondere einen Absorber für solarthermische Kraftwerke.

In einem solarthermischen Kraftwerk ist die Energiequelle solare Strahlung, die durch optische Anlagen, wie z. B. Heleostate oder Parabolrinnen konzentriert wird. Die solare Strahlung ist im Gegensatz zu den Energiequellen herkömmlicher Dampferzeuger nicht regelbar, sondern durch den tages- und jahreszeitlichen Gang der Sonne einer ständigen Änderung unterworfen. Dabei ändert sich sowohl die Einstrahlungsintensität als auch die Einstrahlungsverteilung auf dem Absorber. Die Einstrahlungsverteilung ändert sich beispielsweise auch durch Wind, durch den der Absorber lokal gekühlt wird.

In einem Empfänger, der z. B. aus mehrerer Absorberrohren mit darin eingesetzten volumetrischen Absorbern besteht, wird die konzentrierte Solarstrahlung absorbiert und an ein als Wärmeträgermedium dienendes Gas, beispielsweise Luft, abgegeben. Zur technischen Verwertung der Energie im Wärmeträgermedium gilt insbesondere bei volumetrischen Absorbern, dass die Austrittstemperatur an einer Gasaustrittsfläche des Absorbers möglichst konstant über dem Absorberquerschnitt sein soll. Hierzu muss die Massenstromverteilung des Wärmemediums über der Empfängerfläche, entsprechend der Verteilung der Einstrahlungsintensität angepasst sein.

Der prinzipielle Aufbau eines Absorbers ist in EP 0 124 769 A2 beschrieben. Der Absorber weist von einer Gaseintrittsfläche zu einer Gasaustrittsfläche verlaufende Kanäle auf. Durch die Kanäle wird Gas durchgeleitet, das beim Durchströmen der Kanäle erwärmt wird. Zur Einstellung des Strömungsverhaltens der einzelnen Kanäle weisen die Kanäle im Bereich der Gasaustrittsfläche regelbare Drosselklappen auf. Zur Erhöhung des Wirkungsgrads eines Absorbers ist es erforderlich eine möglichst hohe Anzahl an Kanälen mit möglichst geringem Querschnitt vorzusehen. Aufgrund der in EP 0 124 769 A2 vorgesehenen Drosselklappen innerhalb der Kanäle ist eine Querschnittsverkleinerung der Kanäle nicht möglich.

Als Absorber werden ferner Drahtgeflechte, keramische Schäume oder keramische bzw. metallische Wabenstrukturen eingesetzt. Zur Erhöhung des Wirkungsgrades eines Absorbers weisen die Kanäle, die von der Gaseintrittsfläche zur Gasaustrittsfläche des Absorbers verlaufen einen möglichst geringen Querschnitt auf. Ziel ist es eine möglichst hohe Anzahl Kanäle je Flächeneinheit vorzusehen. Mit Hilfe derartiger Porenkanäle wird die Fläche, an der ein Wärmeübergang zwischen dem Absorber und dem Wärmeträgermedium stattfinden kann, je Volumeneinheit möglichst groß.

Auch bei mittleren Austrittstemperaturen des Wärmeträgermediums an der Gasaustrittsfläche, die deutlich unter der Temperaturbeständigkeit des verwendeten Materials für den Absorber liegen, kommt es zu lokalen Zerstörungen in Form von lokalen Verbrennungen des Absorbers. Aufgrund äußerer Einflüsse treten somit lokal Temperaturen auf, die zum Schmelzen des verwendeten Absorbermaterials führen. Aus diesem Grund werden in modernen solarthermischen Kraftwerken hauptsächlich Absorber aus keramischem Material eingesetzt, da Keramik eine hohe Temperaturbeständigkeit aufweist. Es wurde jedoch festgestellt, dass auch bei keramischem Material lokale Verbrennungen auftreten. Dies hat zur Folge, dass die vorhandene solare Strahlung nicht vollständig genutzt werden kann.

Um die Gefahr lokaler Verbrennungen zu verringern, ist es bekannt in Strömungsrichtung hinter einem Absorber, d. h. an einem Körper mit einer Vielzahl von Porenkanälen eine gemeinsame Blende vorzusehen. Trotz Vorsehens einer derartigen Blende treten jedoch bei intensiver Solareinstrahlung lokale Verbrennungen auf.

Um die Gefahr lokaler Verbrennungen weiter zu verringern, ist es aus DE 197 36 335 ferner bekannt, die einem Absorber zugeordnete gemeinsame Blende variabel zu gestalten. Hierbei ändert sich der Blendendurchmesser automatisch in Abhängigkeit von der Temperatur. Auch bei mit variablen Blenden versehenen Absorbern können, insbesondere in Randbereichen des Absorbers dennoch lokale Verbrennungen auftreten.

Aufgabe der Erfindung ist es, die Gefahr des Auftretens lokaler Verbrennungen bei Gasbehandlungskörpern, insbesondere bei Absorbern für solarthermische Kraftwerke, zu verringern und somit den Wirkungsgrad des Gasbehandlungskörpers und insbesondere eines solarthermischen Kraftwerks zu verbessern.

Die Lösung der Aufgabe erfolgt erfindungsgemäß durch die Merkmale des Patentanspruchs 1.

Es wurde festgestellt, dass die lokalen Verbrennungen von Strömungsinstabilitäten hervorgerufen werden. Diese treten insbesondere in Kanälen mit kleinem Querschnitt auf. Das Auftreten von Strömungsinstabilitäten könnte somit durch eine Vergrößerung der Kanalquerschnitte vermieden werden. Dies hat allerdings eine Verschlechterung des Wirkungsgrads zur Folge, da durch eine Vergrößerung der Kanalquerschnitte die wirksame Fläche zur Wärmeübertragung bzw. zur Behandlung des den Gasbehandlungskörper durchströmenden Gases je Volumeneinheit sinkt.

Zur Verringerung der Gefahr von Strömungsinstabilitäten weist erfindungsgemäß jeder einzelne Porenkanal eine den Kanalquerschnitt verengende Drossel auf. Durch das Vorsehen einer Drossel in jedem Porenkanal wird die Strömung des Wärmeträgermediums in dem einzelnen Porenkanal derart beeinflusst, dass keine Strömungsinstabilitäten mehr auftreten. Somit treten auch bei unterschiedlichen Verteilungen der Einstahlungsintensität an der Gaseintrittsfläche keine lokalen Verbrennungen in einzelnen Porenkanälen mehr auf. Bei der Verwendung des Gasbehandlungskörpers als Absorber in einem solarthermischen Kraftwerk kann die Gaseintrittsfläche daher stets in optimalem Winkel zur Solarstrahlung betrieben werden. Der Wirkungsgrad eines solarthermischen Kraftwerks ist hierdurch erheblich verbessert.

Der erfindungsgemäße Absorberkörper weist eine möglichst große Anzahl an Porenkanälen je Flächeneinheit der Gaseintrittsfläche auf, wobei mindestens 30 Porenkanalöffnungen pro cm² der Gaseintrittsfläche vorgesehen sind. Es kann hiermit ein möglichst geringes Verhältnis des Massevolumens des Gasbehandlungskörpers zum freien Volumen des Absorberkörpers realisiert werden. Dies erhöht den Wirkungsgrad des solarthermischen Kraftwerks. Die Porenkanäle des Gasbehandlungskörpers verlaufen von einer Gaseintrittsfläche zu einer Gasaustrittsfläche, so dass ein Gas, bei welchem es sich, wenn der Gasbehandlungskörper als Absorber in einem solarthermischen Kraftwerk eingesetzt wird, üblicherweise um Luft handelt, durch die Porenkanäle von der Gaseintrittsfläche zur Gasaustrittsfläche strömt.

Die Porenkanäle weisen einen möglichst geringen Querschnitt auf, wobei die Porendichte an der Gaseintrittsfläche mindestens 30 Porenkanalöffnungen pro cm² beträgt. Zur Erhöhung der wirksamen Fläche, an der ein Austausch zwischen dem die Porenkanäle durchströmenden Gas und den Innenwänden der Porenkanäle stattfindet, sind vorzugsweise mindestens 100 insbesondere mindestens 150 Porenkanalöffnungen pro cm² vorgesehen. Unabhängig von der Wandstärke zwischen den einzelnen Porenkanälen weisen die Porenkanäle vorzugsweise einen Querschnitt auf, der kleiner als 2 mm² vorzugsweise kleiner als 1 mm², insbesondere vorzugsweise kleiner als 0,5 mm² ist.

Die Drossel ist durch mindestens einen quer durch den Porenkanal verlaufenden Steg gebildet. Bei einem derartigen Steg handelt es sich um eine in den Porenkanal hineinragende Wand, durch die der Kanalquerschnitt verengt wird. Als Drossel kann ferner eine Blende vorgesehen sein. Die Blende ist vorzugsweise derart ausgebildet, dass der Porenkanal gleichmäßig verengt wird, d. h. dass die Blendenöffnung im Wesentlichen dem Querschnitt des Porenkanals entspricht und mittig im Porenkanal angeordnet ist. Somit ist der Abstand zwischen dem Blendenrand und der Innenwand des Porenkanals im Wesentlichen konstant. Hierdurch wird die Stabilität der Strömung weiter verbessert.

Um die Strömung auch bei hohen auftretenden Temperaturen zu stabilisieren, wird der Kanalquerschnitt durch die Drossel vorzugsweise um mindestens 30 % verringert. Besonders bevorzugt ist eine Verringerung des Kanalquerschnitts um mindestens 50 %.

Vorzugsweise ist die Drossel im Abstand zur Gaseintrittsfläche angeordnet. Zur Erzielung einer möglichst stabilen Strömung ist es vorteilhaft, wenn die Drossel oder die Blende nicht direkt am Kanaleintritt, d. h. in der Gaseintrittfläche, sondern innerhalb des Gasbehandlungskörpers in einem Abstand zur Gaseintrittsfläche vorzusehen ist. Der Abstand zur Gaseintrittsfläche beträgt vorzugsweise 2 - 10 mm. Besonders bevorzugt sind 3 - 5 mm.

Anstelle jedem einzelnen Porenkanal eine Drossel zuzuordnen, kann auch einer geringen Anzahl von Porenkanälen eine gemeinsame Drossel zugeordnet werden. Hierdurch wird annähernd dieselbe Wirkung erzielt, die Instabilität der Strömung zu verringern. Beispielsweise kann 10 bis 20 Porenkanälen eine gemeinsame Drossel zugeordnet werden.

Bei dem Gasbehandlungskörper handelt es sich beispielsweise um eine poröse Struktur aus Keramik mit im Wesentlichen parallel zueinander verlaufenden Porenkanälen. Dadurch, dass durch das erfindungsgemäße Vorsehen von Drosseln in jedem Porenkanal keine lokale Überhitzungen auftreten, ist es ferner möglich den Gasbehandlungskörper aus Metall herzustellen. Da die Temperatur durch das Vorsehen der einzelnen Drosseln in keinem der Porenkanäle über den Schmelzpunkt des Materials steigt, treten auch bei metallischen Gasbehandlungskörpern keine lokalen Verbrennungen, bzw. kein Schmelzen des Materials auf. Hierdurch können die Kosten für einen Gasbehandlungskörper erheblich reduziert werden.

Bei einer bevorzugten Ausführungsform des Gasbehandlungskörpers sind die Porenkanäle durch aufeinandergestapelte Platten mit wellenförmigem Querschnitt gebildet. Hierbei wird unter wellenförmig beispielsweise eine sinusartige Welle, eine zickzackartige oder sägezahnartige Welle sowie eine Rechteckswelle oder dergleichen verstanden. Die Porenkanäle durch das Aufeinanderstapeln von wellenförmigen Platten zu bilden, ist eine äußerst kostengünstige Variante zur Ausbildung eines Gasbehandlungskörpers. Vorzugsweise sind zwischen den Platten jeweils ebene Zwischenplatten angeordnet. Hierdurch wird die Anzahl der Porenkanäle auf einfache Weise pro Flächeneinheit der Gaseintrittsfläche erhöht.

Bei dieser Ausführungsform sind die Drosseln der einzelnen Porenkanäle vorzugsweise durch in der wellenförmigen Platte vorgesehene Kerben gebildet, die als Stege in die Kanäle ragen. Die einzelnen Kerben können hierbei vor dem Aufeinanderstapeln der wellenförmigen Platten in die Wellen eingeformt werden, so dass nach dem Aufeinanderstapeln der Platten, gegebenenfalls abwechselnd mit Zwischenplatten, unmittelbar Kanäle mit entsprechenden Drosseln gebildet sind.

Der vorstehend beschriebene Gasbehandlungskörper ist besonders gut in solarthermischen Kraftwerken einsetzbar. Hierbei ist die Gaseintrittsfläche der einfallenden Solarstrahlung zugewandt. Mittels einer Ansaugvorrichtung wird Umgebungsluft durch die Poreneintrittsöffnungen der Gaseintrittsfläche durch die Porenkanäle des Absorbers gesaugt, so dass als Gas Umgebungsluft, die als Wärmeträgermedium dient, durch die Porenkanäle strömt. Die aufgewärmte Luft tritt an der Gasaustrittsfläche aus dem Absorber aus und wird beispielsweise zum Betreiben einer Dampfturbine verwendet.

Der Gasbehandlungskörper kann auch als Katalysator verwendet werden. Hierzu sind die Kanalinnenwände zumindest teilweise mit einer katalytisch aktiven Substanz beschichtet. Das mit dem Katalysator zu behandelnde Medium strömt durch die Porenkanäle, wobei wiederum durch die jedem einzelnen Kanal zugeordnete Drossel eine stabile Strömung erreicht wird. Hierdurch kann der Wirkungsgrad von Kraftfahrzeugkatalysatoren erhöht werden. Ebenso kann der Gasbehandlungskörper als Katalysator für chemische Prozesse eingesetzt werden.

Nachfolgend wird die Erfindung anhand einer bevorzugten Ausführungsform, unter Bezugnahme auf die anliegenden Zeichnungen näher erläutert.

Es zeigen:
- Fig. 1: Eine schematische Vorderansicht einer ersten Ausführungsform des erfindungsgemäßen Gasbehandlungskörpers,
- Fig. 2: eine Schnittansicht entlang der Linie II-II in Fig. 1,
- Fig. 3: eine schematische perspektivische Ansicht einer weiteren Ausführungsform des erfindungsgemäßen Gasbehandlungskörpers und
- Fig. 4: eine schematische Vorderansicht eines Teils des in Fig. 3 dargestellten Gasbehandlungskörpers.

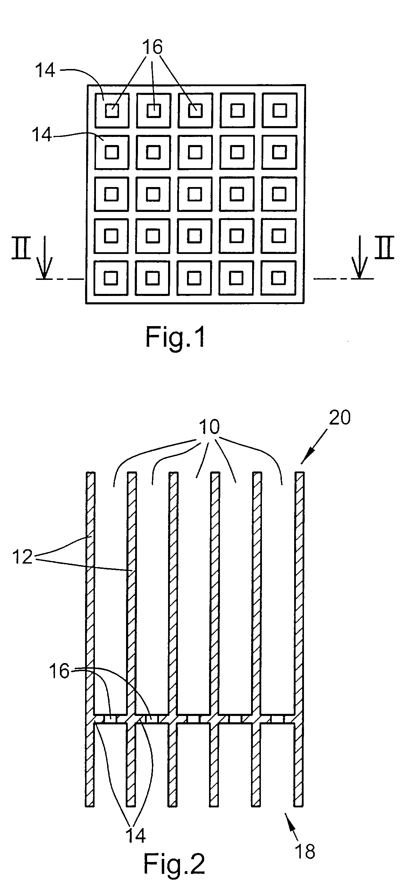

Bei der in Fign. 1 und 2 dargestellten Ausführungsform handelt es sich um einen Gasbehandlungskörper mit regelmäßig zueinander angeordneten, parallel zueinander verlaufenden Porenkanälen 10 mit quadratischem Querschnitt. Die einzelnen Porenkanäle 10 sind durch Kanalwände 12, die ein regelmäßiges Gitter bilden, voneinander getrennt. Im Inneren der Porenkanäle 10 sind Blenden 14 mit quadratischen Öffnungen 16 vorgesehen. Die quadratische Öffnung 16 ist mittig in jedem Porenkanal 10 angeordnet, so dass die Blende um den gesamten inneren Umfang des Porenkanals dieselbe Breite aufweist.

Das zu behandelnde Gas, bei dem es sich vorzugsweise um Luft handelt, wenn der Gasbehandlungskörper als Absorber in einem solarthermischen Kraftwerk eingesetzt wird, tritt somit an einer Gaseintrittsfläche 18 in die Porenkanäle 10 des Gasbehandlungskörpers ein und an einer Gasaustrittsfläche 20 wieder aus dem Gasbehandlungskörper aus. Die Gaseintrittsfläche ist in Fig. 1 als Vorderansicht sichtbar.

Bei der Verwendung als Absorber in einem solarthermischen Kraftwerk wird die in den Wänden 12 des Gasbehandlungskörpers gespeicherte Wärme an die Luft als Wärmeübertragungsmedium abgegeben.

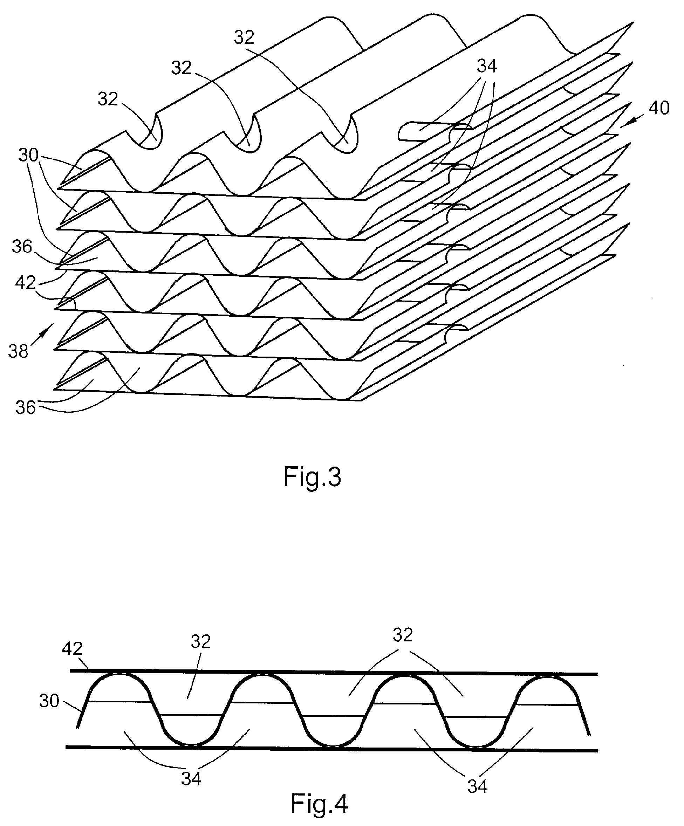

Die zweite bevorzugte Ausführungsform der Erfindung (Fign. 3 und 4) weist mehrere aufeinander gestapelte wellenförmige Platten 30 auf. Die einzelnen Platten 30 weisen im Querschnitt eine sinusförmige Wellenstruktur auf. In jeder einzelnen Welle sind Kerben 32, 34 vorgesehen. Bei den Kerben handelt es sich um konvexe Einbuchtungen, die nach innen in die durch die wellenförmige Platte gebildeten Porenkanäle 36 ragen.

Die Kerben 34 sind gegenüber den Kerben 32 in axialer Richtung versetzt. In Durchströmungsrichtung, d. h. von einer Gaseintrittsfläche 38 in Richtung einer Gasaustrittsfläche 40 sind in den Kanälen 36 somit zuerst die Kerben 32 und anschließend die Kerben 34 ausgebildet.

Zur Erhöhung der Anzahl an Porenkanalöffnungen je Flächeneinheit sowie zur Erhöhung der Stabilität des Gasbehandlungskörpers sind zwischen den wellenförmigen Platten 30 ebene Platten 42 vorgesehen. Sowohl bei den wellenförmigen Platten 30 als auch bei den Zwischenplatten 42 handelt es sich vorzugsweise um Platten aus Metall.

Zur Herstellung des Gasbehandlungskörpers werden somit identische wellenförmige Platten 30 abwechselnd mit ebenen Platten 42 gestapelt. Zur Lagefixierung der einzelnen Platten zueinander ist es ausreichend diese in einem Rahmen oder Rohr anzuordnen.

## Patentansprüche

1. Gasbehandlungskörper, insbesondere Absorber für solarthermische Kraftwerke, mit einer Gaseintrittsfläche (18, 38) und einer Gasaustrittsfläche (20, 40), mit mehreren im wesentlichen parallel zueinander von der Gaseintrittsfläche (18, 38) zur Gasaustrittsfläche (20, 40) verlaufenden Kanälen (10, 36) zur Durchleitung eines Gases, wobei in jedem Porenkanal (10, 36) eine den Kanalquerschnitt verengende Drossel (14, 32, 34) vorgesehen ist,
**dadurch gekennzeichnet,**
**dass** es sich bei den Kanälen (10, 36) um Porenkanäle handelt, die Gaseintrittsfläche (18, 38) eine Porendichte von mindestens dreißig Porenkanalöffnungen pro cm² aufweist, und
**dass** die Drossel durch mindestens einen quer durch den Porenkanal verlaufenden Steg (32, 34) gebildet ist.

2. Gasbehandlungskörper nach Anspruch 1, **dadurch gekennzeichnet, dass** als Drossel eine Blende (14) vorgesehen ist.

3. Gasbehandlungskörper nach Anspruch 1 oder 2, **dadurch gekennzeichnet, dass** die Stege (32, 34) bzw. Blenden (14) benachbarter Porenkanäle (10, 36) zueinander axial versetzt sind.

4. Gasbehandlungskörper nach einem der Ansprüche 1 - 3, **dadurch gekennzeichnet, dass** der Querschnitt eines Porenkanals (10, 36) kleiner als 2 mm², vorzugsweise kleiner als 1 mm², insbesondere vorzugsweise kleiner als 0,5 mm² ist.

5. Gasbehandlungskörper nach einem der Ansprüche 1 - 4, **dadurch gekennzeichnet, dass** der Kanalquerschnitt durch die Drossel (14, 32, 34) um mindestens 30 %, vorzugsweise um mindestens 50 % verringert wird.

6. Gasbehandlungskörper nach einem der Ansprüche 1 - 5, **dadurch gekennzeichnet, dass** die Drossel (14, 32, 34) im Abstand zur Gaseintrittsfläche angeordnet ist.

7. Gasbehandlungskörper nach einem der Ansprüche 1 - 6, **dadurch gekennzeichnet, dass** die Porenkanäle (36) durch aufeinander gestapelte Platten (30) mit wellenförmigem Querschnitt gebildet sind.

8. Gasbehandlungskörper nach Anspruch 7, **dadurch gekennzeichnet, dass** zwischen den Platten (30) jeweils eine ebene Zwischenplatte (42) angeordnet ist.

9. Gasbehandlungskörper nach Anspruch 7 oder 8, **dadurch gekennzeichnet, dass** die Drosseln durch in der Platte (30) vorgesehene Kerben (32, 34) gebildet sind, die als Stege in die Kanäle (36) ragen.

10. Gasbehandlungskörper nach einem der Ansprüche 1 - 9, **gekennzeichnet durch** seine Verwendung als Absorber für solarthermische Kraftwerke, wobei die Gaseintrittsfläche (18, 38) einfallender Solarstrahlung zugewandt ist und Umgebungsluft als Gas **durch** die Porenkanäle (36) strömt.

11. Gasbehandlungskörper nach einem der Ansprüche 1 - 9, **gekennzeichnet durch** seine Verwendung als Katalysator, wobei die Kanalinnenwände zumindest teilweise mit einer katalytisch aktiven Substanz beschichtet sind.
